(19) Europäisches Patentamt
European Patent Office
Office européen des brevets

(11)  **EP 3 088 700 B1**

(12)  **EUROPEAN PATENT SPECIFICATION**

(45) Date of publication and mention
of the grant of the patent:
**01.05.2019 Bulletin 2019/18**

(51) Int Cl.:
**F02B 39/00** *(2006.01)*      **F01D 25/24** *(2006.01)*

(21) Application number: **15731236.4**

(22) Date of filing: **05.01.2015**

(86) International application number:
**PCT/JP2015/050050**

(87) International publication number:
**WO 2015/099199 (02.07.2015 Gazette 2015/26)**

(54) **TURBINE**

TURBINE

TURBINE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **27.12.2013 JP 2013271673**

(43) Date of publication of application:
**02.11.2016 Bulletin 2016/44**

(73) Proprietor: **MITSUBISHI HEAVY INDUSTRIES, Ltd.
Tokyo 108-8215 (JP)**

(72) Inventors:
• **YOKOYAMA, Takao**
**Tokyo 108-8215 (JP)**

• **IBARAKI, Seiichi**
**Tokyo 108-8215 (JP)**
• **MARTINEZ-BOTAS, Ricardo**
**London SW7 2AZ (GB)**
• **YANG, Mingyang**
**London SW7 2AZ (GB)**

(74) Representative: **Mader, Joachim et al
Bardehle Pagenberg Partnerschaft mbB
Patentanwälte, Rechtsanwälte
Prinzregentenplatz 7
81675 München (DE)**

(56) References cited:
**WO-A2-2012/061545      JP-A- S63 186 915
JP-B2- 5 087 160      US-A1- 2010 074 744
US-A1- 2013 052 054**

## Description

TECHNICAL FIELD

The present invention relates to a turbine.

BACKGROUND ART

A housing for a turbine used in a turbocharger and the like has a scroll part. This scroll part extends along the circumferential direction of a turbine rotor blade to surround the turbine rotor blade. The scroll part is configured so that fluid flowing into an inlet of the scroll part impinges on the turbine rotor uniformly over the entire circumference of the turbine blade. Specifically, the scroll part is configured such that a A/R ratio of a flow passage area A of the scroll part to a distance R between an axis of the turbine rotor blade and a flow passage center of the scroll part decreases from the inlet of the scroll part toward an end of the scroll part.

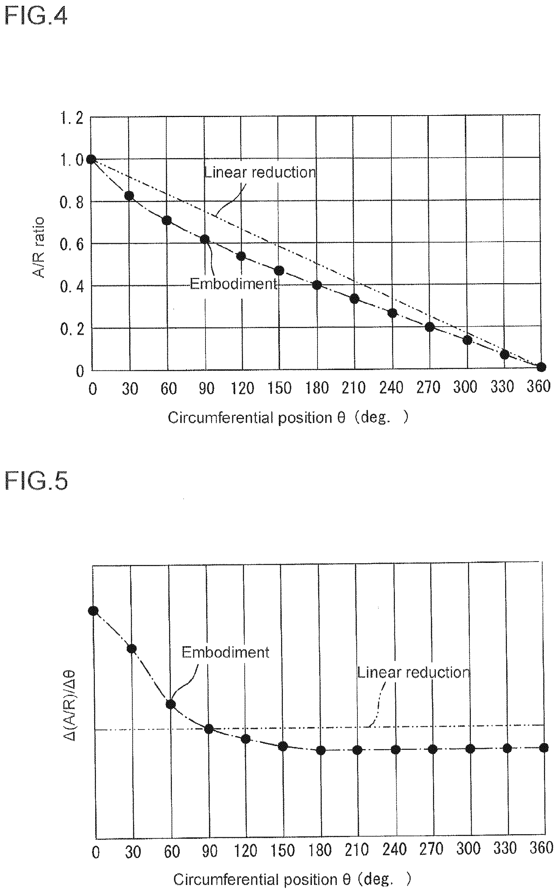

For instance, FIG.4 of US 2013/0219885 illustrates curves representing respective relationships between a position of a passage of the scroll part in the circumferential direction of the turbine rotor and the A/R ratio. These curves have upward convex shapes, and a change rate of A/R increases on a terminal side of the scroll part.

Further, there are some cases where A/R linearly decreases from a turbine inlet to a turbine exducer.

Document US 2013/0052054 A1 describes a turbocharger, wherein in one embodiment, the turbo chasing may include a torus shaped chamber having a cross-sectional area that progressively increases in an annular direction.

Document US 2010/0074744 A1 describes a turbine housing that may be volute shaped and includes a tongue diverter disposed therein. The tongue member may be arranged to produce a constant ratio throughout the turbine housing between the cross-sectional area of fluid passages and the distance between the centroid of that area and the axis of rotation of the turbine.

Document JP 50 87 160 B2 describes a turbine, wherein a scroll portion is divided in a radial direction into an inner peripheral scroll portion and an outer peripheral scroll portion, and a communication portion which communicates between these scroll portions.

SUMMARY

Problem to be Solved

Conventionally, a scroll part of a turbine has been designed without considering exhaust pulsation. This is because it is thought the effect of the exhaust pulsation can be ignored as the cycle of the exhaust pulsation is long and also it is difficult to design the turbine with the exhaust pulsation in mind as it requires evaluation of an unsteady flow in the turbine.

However, it has been reported in recent years that the exhaust pulsation deteriorates turbine efficiency. In view of the report, the performance decline is caused by the exhaust pulsation in existing turbines as well.

In such situation, by designing the scroll part of the turbine based on a new concept which considers the exhaust pulsation, it is possible to not only improve the turbine efficiency but improve fuel efficiency in an automobile, a ship or the like in which the turbine is used.

In view of this, it is an object of at least one embodiment of the present invention to provide a turbine which has favorable turbine efficiency even when introduced fluid contains pulsation

Solution to the Problems

A turbine according to at least one embodiment of the present invention comprises:

a turbine rotor blade;
a turbine housing having a scroll part extending along a circumferential direction of the turbine rotor blade, and
the scroll part is configured such that an A/R ratio of a flow passage area A to a distance R between an axis of the turbine rotor blade and a flow passage center of the scroll part has a concave distribution at least in a part of a graph where an abscissa represents a circumferential position around the axis of the turbine rotor blade and an ordinate represents the A/R ratio.

With this configuration, the A/R ratio has a concave distribution at least in a part of the graph, and the flow passage area of the scroll part changes more significantly on the inlet side than on the end side. Therefore, the volume of the scroll part is reduced significantly on the inlet side compared to the conventional case.

With the reduced volume of the scroll part on the inlet side, the amplitude of the pulsation pressure of the fluid is increased on the inlet side of the scroll part. Further, with the increased pulsation pressure on the inlet side, the fluid flows smoothly toward the turbine rotor blade on the inlet side of the scroll part. As a result, the turbine efficiency is improved, hence improving the turbine output.

In the conventional case where the A/R decreases linearly, it is necessary to reduce the inlet area of the scroll part to reduce the volume of the scroll part. However, by reducing the inlet area of the scroll part, the flow characteristic changes significantly. In this view, with the above configuration, the volume is reduced on the inlet side of the scroll part and thus, it is possible to reduce the volume of the scroll part without changing the inlet area of the scroll part. As a result, with this configuration, it is possible to minimize the effects on the flow characteristic and improve the turbine efficiency.

In some embodiments, provided that the circumferential position is 0° at an inlet of the scroll part and a positional value of the circumferential position increases from the inlet toward an end of the scroll part, the scroll part is configured such that a rate of change of the A/R while the circumferential position changes from 0° to 90° is at least 1.2 times higher than a case where the A/R linearly decreases.

With this configuration, as the rate of change of the A/R is at least 1.2 times higher than the case where the A/R linearly decreases, if the flow passage area at the inlet of the scroll part is maintained at the same value as the linear reduction case, the volume of the scroll part can be reduced. As a result, even if there is pulsation, it is possible to reliably improve the turbine efficiency while minimizing the effect on the flow characteristic.

In some embodiments, as the rate of change of the A/R is at least 1.4 times higher than the case where the A/R linearly decreases, if the flow passage area at the inlet of the scroll part is maintained at the same value as the case where the A/R linearly decreases, the volume of the scroll part can be further reduced compared to the case where the A/R linearly decreases. As a result, it is possible to further improve the turbine efficiency while minimizing the effect on the flow characteristic.

In some embodiments, the scroll part is configured such that the rate of change of the A/R while the circumferential position changes from 0° to 90° is up to three times higher than a case where the A/R linearly decreases.

As the rate of change of the A/R while the circumferential position $\theta$ changes from 0° to 90° is up to three times higher than the linear reduction case, it is possible to prevent local excessive increase of an angle of the flow formed by the scroll part, hence suppressing generation of the pressure loss.

[Advantageous Effects]

According to at least one embodiment of the present invention, it is possible to provide a turbine which has favorable turbine efficiency even if fluid to be introduced contains pulsation.

BRIEF DESCRIPTION OF DRAWINGS

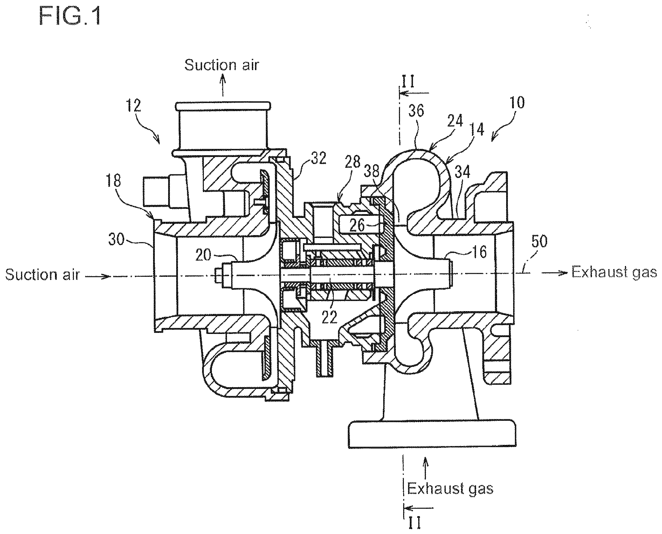

FIG. 1 is a schematic cross-sectional view of a turbocharger along a longitudinal direction, according to some embodiments of the present invention.

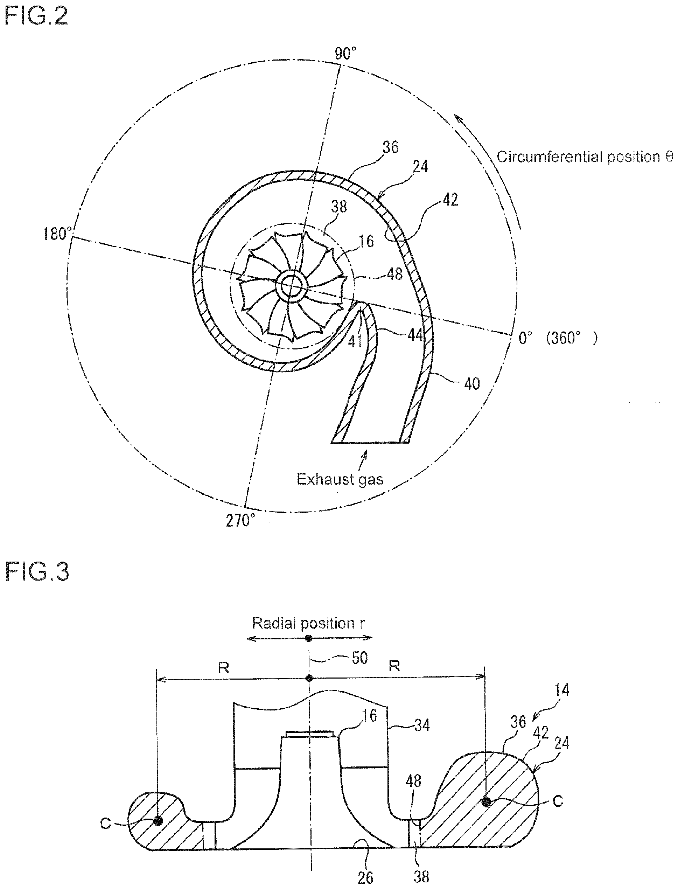

FIG.2 is a schematic cross-sectional view along line II-II of FIG.1.
FIG.3 is an explanatory diagram of A/R of a scroll part.
FIG.4 is a graph where an abscissa represents a circumferential position $\theta$ around the axis of the turbine rotor blade and an ordinate represents the A/R ratio, illustrating one embodiment and a linear reduction case as to the relationship between the circumferential position $\theta$ and the A/R ratio.
FIG.5 is a graph where the abscissa represents the circumferential position $\theta$ around the axis of the turbine rotor blade and the ordinate represents $\Delta(A/R)/\Delta\theta$ which is a ratio of a change rate $\Delta(A/R)$ of the A/R ratio to a change rate $\Delta\theta$ of the circumferential position $\theta$, illustrating the embodiment and the linear reduction case, as to the relationship between the circumferential position $\theta$ and the ratio $\Delta(A/R)/\Delta\theta$.

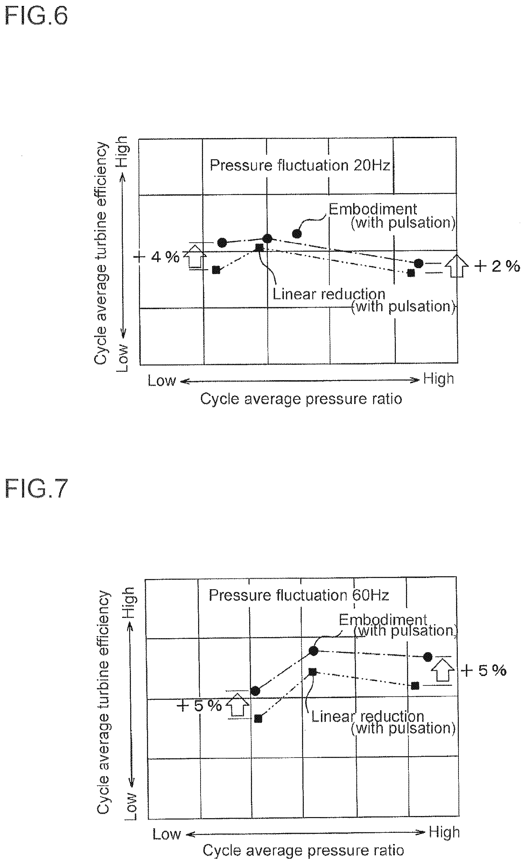

FIG.6 is a graph where the abscissa represents a cycle average turbine pressure ratio and the ordinate represents a cycle average turbine efficiency, illustrating the embodiment and the linear reduction case, as to a relationship between the cycle average turbine pressure ratio and the cycle average turbine efficiency when the pressure fluctuation of exhaust gas is 20Hz.
FIG.7 is a graph where the abscissa represents the cycle average turbine pressure ratio and the ordinate represents the cycle average turbine efficiency, illustrating the embodiment and the linear reduction case, as to a relationship between the cycle average turbine pressure ratio and the cycle average turbine efficiency when the pressure fluctuation of exhaust gas is 60Hz.

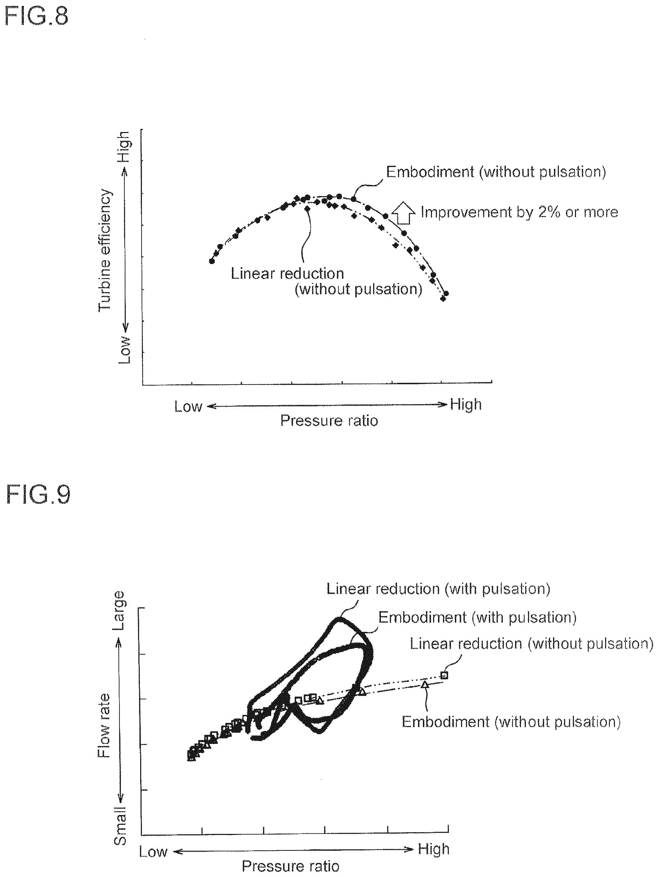

FIG.8 is a graph where the abscissa represents a turbine pressure ratio and the ordinate represents a turbine efficiency, illustrating the embodiment and the linear reduction case, as to a relationship between the pressure ratio and efficiency when the fluid introduced into the turbine does not contain pulsation.
FIG.9 is a graph where the abscissa represents a turbine pressure ratio and the ordinate represents a turbine flow rate, illustrating the embodiment and the linear reduction case, as to a relationship between the pressure ratio and the flow rate when the fluid introduced into the turbine contains pulsation.

DETAILED DESCRIPTION

Embodiments of the present invention will now be described in detail with reference to the accompanying drawings. It is intended, however, that unless particularly specified, dimensions, materials, shapes, relative positions and the like of components described in the embodiments shall be interpreted as illustrative only and not limitative of the scope of the present invention.

FIG.1 is a schematic cross-sectional view of a turbocharger taken along a longitudinal direction, according to some embodiments of the present invention. The turbocharger is applicable to a vehicle, a ship, etc.

The turbocharger comprises provided with a turbine 10 and a compressor 12. The turbine 10 comprises a turbine housing 14, and a turbine rotor blade (an impeller) 16 accommodated in the turbine housing 14. The compressor 12 comprises a compressor housing 18 and an impeller accommodated in the compressor housing 18.

The turbine rotor blade 16 of the turbine 10 and the impeller 20 of the compressor 12 are coupled to each other via a shaft 22. The turbine rotor blade 16 of the turbine 10 is rotated with exhaust gas exhausted from an internal combustion engine. By this, the impeller 20 of the compressor 12 is rotated via the shaft 22. Then, by the rotation of the impeller 20 of the compressor 12, suction air supplied to the internal combustion engine is compressed.

For instance, the turbine housing 14 is configured by a turbine casing 24 and an end wall 26 which is connected to the turbine casing 24, and the shaft 22 passes through the end wall 26. The end wall 26 is sandwiched between the turbine casing 24 and the bearing housing 28, and the bearing housing 28 is configured to rotatably support the shaft 22 via a bearing.

For instance, the compressor housing 18 is configured by a compressor casing 30 and an end wall 32 which is connected to the compressor casing 30, and the shaft 22 passes through the end wall 32. The end wall 32 is integrally formed with the bearing housing 28.

The turbine housing 14 comprises a tubular part 34 accommodating the turbine rotor blade 16, a scroll part (a volute part) extending along the circumferential direction of the turbine rotor blade 16 and the tubular part 34, and a communication part 38 which brings the tubular part 34 and the scroll part 36 into communication with each other. In some embodiments, the turbine housing 14 comprises an introducing part 40 for fluid, which continues to the scroll part 36. An outlet for fluid is formed by the tubular part 34.

FIG.2 is a schematic cross-sectional view along line II-II of FIG.1.

The circumferential position of the turbine rotor blade 16 (the circumferential position θ) is 0° at an inlet (a starting end) of the scroll part 36, as illustrated in FIG.2. The position where the circumferential position θ is 0° is defined as a tip of a tongue part 41. The tongue part 41 is a section where an outer peripheral wall 42 of the scroll part 36 of the turbine casing 24 intersects a wall 44 of the introducing part 40 at an acute angle.

The circumferential position of the turbine rotor blade 16 (the circumferential position θ) is 360° at an end of the scroll part 36.

Further, it is provided that a positional value of the circumferential position θ increases from the inlet toward the end of the scroll part 36 in a flow direction of the fluid in the scroll part 36.

Meanwhile, an inner peripheral edge of the scroll part 36 is defined by a virtual circle 48 around an axis (a rotation axis) of the turbine rotor blade 16 such as to contact the tongue part 41.

An outer peripheral edge of the scroll part 36 is defined by the outer peripheral wall 42 of the scroll part 36, and a flow passage area A of the scroll part 36 is an area of a space which is formed between the circle 48 and the outer peripheral wall 42 of the scroll part 36.

FIG.3 is an explanatory diagram of A/R of the scroll part 36. The A/R is a ratio of the flow passage area A of the scroll part 36 to a distance R between the axis 50 of the turbine rotor blade 16 and the flow passage center C of the scroll part 36. In FIG.3, the sections with the hatches represent a flow passage of the scroll part 36.

Here, the A/R is defined by the following formula (1).

$$A/R = \int_A \frac{1}{r} dA \quad \cdots (1)$$

where r is a radial position in the radial direction of the turbine rotor blade 16, and dA is a small area element of the section of the flow passage area of the scroll part 36. Once the flow passage area A and a sectional shape of the flow passage of the scroll part 36 are defined, it is possible to determine the distance R based on the formula (1). This can, however, be simplified by using, as the distance R, a distance between the axis 50 and the center of the flow passage of the scroll part 36.

FIG.4 is a graph where the abscissa represents the circumferential position θ around the axis of the turbine rotor blade 16 and the ordinate represents the A/R ratio, illustrating one embodiment and the linear reduction case, as to the relationship between the circumferential position θ and the A/R ratio. The flow passage area A at the inlet of the scroll part 36 in this embodiment is the same as that in the linear reduction case. The A/R in FIG.4 is standardized so that the A/R is 1 at the inlet of the scroll part 36.

FIG.5 is a graph where the abscissa represents the circumferential position θ around the axis of the turbine rotor blade 16 and the ordinate represents a ratio of a change rate Δ(A/R) of the A/R ratio to a change rate Δθ of the circumferential position θ (hereinafter, referred to as the change rate Δ(A/R)/Δθ as well), illustrating the embodiment and also the linear reduction case, as to the relationship between the circumferential position θ and the change rate Δ(A/R)/Δθ. The curve of FIG.5 represents absolute values of differentiated A/R curve of FIG.4.

FIG.6 is a graph where the abscissa represents a cycle average turbine pressure ratio and the ordinate represents a cycle average turbine efficiency, illustrating the embodiment and the linear reduction case, as to the relationship between the cycle average turbine pressure ratio and the cycle average turbine efficiency when the pressure fluctuation of exhaust gas is 20Hz.

The cycle average turbine pressure ratio is an average value of the turbine pressure ratio in one cycle of the pressure fluctuation of the fluid (exhaust gas) introduced to the turbine. The cycle average turbine efficiency is an average value of the turbine efficiency in one cycle of the pressure fluctuation of the exhaust gas.

FIG.7 is, similarly to FIG.6, a graph where the abscissa represents the cycle average turbine pressure ratio and the ordinate represents the cycle average turbine efficiency, illustrating the embodiment and the linear reduction case, as to a relationship between the cycle average turbine pressure ratio and the cycle average turbine efficiency when the pressure fluctuation of exhaust gas is 60Hz.

FIG.8 is a graph where the abscissa represents a turbine pressure ratio and the ordinate represents a turbine efficiency, illustrating the embodiment and the linear reduction case, as to a relationship between the pressure ratio and the efficiency when the fluid introduced into the turbine does not contain pulsation.

FIG.9 is a graph where the abscissa represents a turbine pressure ratio and the ordinate represents a turbine flow rate, illustrating the embodiment and the linear reduction case, as to a relationship between the pressure ratio and the flow rate when the fluid introduced into the turbine contains pulsation.

As illustrated in FIG.4, the scroll part 36 is configured such that the A/R ratio has a concave distribution at least in a part of a graph where the abscissa represents the circumferential position $\theta$ around the axis 50 of the turbine rotor blade 16 and the ordinate represents the A/R ratio. In other words, the scroll part 36 the change rate $\Delta(A/R)/\Delta\theta$ on the inlet side is larger than the change rate $\Delta(A/K)/\Delta\theta$ on the end side. The larger change rate $\Delta(A/K)/\Delta\theta$ means a larger absolute value.

With this configuration, the A/R has a concave distribution at least in a part of the graph as illustrated in FIG.4, and the flow passage area A of the scroll part 36 changes more significantly on the inlet side than on the end side. Therefore, the volume of the scroll part 36 is significantly reduced on the inlet side compared to the conventional case.

With the reduced volume of the scroll part 36 on the inlet side, the amplitude of the pulsation pressure of the fluid is increased on the inlet side of the scroll part 36. Further, with the increased pulsation pressure on the inlet side, the fluid flows smoothly on the inlet side of the scroll part 36 toward the turbine rotor blade 16. As a result, the turbine efficiency is improved, hence improving the turbine output.

Specifically, as illustrated in FIG.6, even in the case where the fluid to be introduced contains low frequency pulsation, the cycle average turbine efficiency is improved in the embodiment, compared to the linear reduction case where the A/R decreases linearly, by 4% on a low side where the cycle average pressure ratio is low and by 2% on a high side where the cycle average pressure ratio is high.

As illustrated in FIG.7, even in the case where the fluid to be introduced contains relatively high frequency pulsation, the cycle average turbine efficiency is improved in the embodiment, compared to the linear reduction case, by 5% on both the low side and the high side.

Meanwhile, as illustrated in FIG.8, even in the case the fluid to be introduced does not contain pulsation, the turbine efficiency is improved in the embodiment, compared to the linear reduction case, by 2% or more at maximum on the high side.

In the conventional case where the A/R decreases linearly, it is necessary to reduce the inlet area of the scroll part to reduce the volume of the scroll part. However, if the inlet area of the scroll part is reduced, the flow characteristic changes significantly. In this view, with the above configuration, the volume is made smaller on the inlet side of the scroll part 36 and thus, it is possible to reduce the volume of the scroll part while minimizing the change of the inlet area of the scroll part 36. As a result, with this configuration, it is possible to minimize the effects on the flow characteristic and improve the turbine efficiency.

Specifically, as illustrated in FIG.9, if the fluid to be introduced does not contain the pulsation, there is no significant difference in the flow characteristic between the embodiment and the case. However, if the fluid contains pulsation, in the linear reduction case, the flow rate changes significantly in response to the change of the pressure ratio, and large hysteresis is observed. In contrast, in the present embodiment, the change of the flow rate in response to the pressure ratio change is suppressed, and the hysteresis is reduced.

In some embodiments, provided that the circumferential position $\theta$ is 0° at the inlet of the scroll part 36 and the positional value of the circumferential position $\theta$ increases from the inlet toward the end of the scroll part 36, the scroll part 36 is configured such that the change rate $\Delta(A/R)/\Delta\theta$ of the A/R while the circumferential position $\theta$ changes from 0° to 90° is at least 1.2 times higher than the case where the A/R linearly decreases.

The change rate $\Delta(A/R)/\Delta\theta$ of the A/R while the circumferential position $\theta$ changes from 0° to 90° can be obtained such that a difference $((A/R)_{\theta=0} - (A/R)_{\theta=90})$ between the change rate $((A/R)_{\theta=0})$ when the circumferential position is 0° and the change rate $((A/R)_{\theta=90})$ when the circumferential position is 90° is divided by 90° which is the difference of the circumferential position $\theta$.

With this configuration, if the flow passage area A at the inlet of the scroll part 36 is maintained at the same value as the linear reduction case where the A/R decreases linearly, for instance, the volume of the scroll part 36 can be reduced by 5% or more compared to the linear reduction case in the A/R distribution of FIG.4. As a result, even if there is pulsation, it is possible to reliably improve the turbine efficiency while minimizing the effect on the flow characteristic.

In some embodiments, the scroll part 36 is configured such that the change rate $\Delta(A/R)/\Delta\theta$ of the A/R while the circumferential position $\theta$ changes from 0° to 90° is at least 1.4 times higher than the case where the A/R linearly decreases.

With this configuration, if the flow passage area A at the inlet of the scroll part 36 is maintained at the same value as the linear reduction case where the A/R decreases linearly, for instance, in the A/R distribution of FIG.4, the volume of the scroll part 36 can be reduced by 10% or more compared to the case where the A/R decreases linearly. As a result, it is possible to further improve the turbine efficiency while minimizing the effect on the flow characteristic.

In some embodiments, the scroll part 36 is configured such that the change rate $\Delta(A/R)/\Delta\theta$ of the A/R while the circumferential position $\theta$ changes from 0° to 90° is up to three times higher than the case where the A/R linearly decreases.

With this configuration, as the change rate $\Delta(A/R)/\Delta\theta$ of the A/R while the circumferential position $\theta$ changes from 0° to 90° is up to three times higher than the linear reduction case, it is possible to prevent local excessive increase of an angle of the flow formed by the scroll part 36, hence suppressing generation of the pressure loss.

In some embodiments, provided that the circumferential position $\theta$ is 0° at the inlet of the scroll roll part 36 and the positional value of the circumferential position $\theta$ increases from the inlet toward the end of the scroll part 36, the scroll part 36 is configured such that the change rate $\Delta(A/R)/\Delta\theta$ of the A/R of the scroll art 36, in a rage where the circumferential position $\theta$ is at least 0° and not greater than 90°, is higher than the case where the A/R linearly decreases.

In some embodiments, the scroll part 36 is configured such that the change rate $\Delta(A/R)/\Delta\theta$ of the A/R of the scroll art 36, in a rage where the circumferential position $\theta$ is at least 0° and not greater than 60°, is higher than the case where the A/R linearly decreases. In other words, the scroll part 36 is configured such that, as illustrated in FIG.4, the inclination of the A/R in the range where the circumferential position $\theta$ is at least 0° and not greater than 60° is greater than the case where the A/R linearly decreases.

In some embodiments, the scroll part 36 is configured such that the change rate $\Delta(A/R)/\Delta\theta$ of the A/R of the scroll art 36, at a position where the circumferential position $\theta$ is 30°, is 1.3 times higher than the case where the A/R linearly decreases. In other words, the scroll part 36 is configured such that the inclination of the A/R at the 30° position is 1.3 times greater than the case where the A/R linearly decreases.

While the embodiments of the present invention have been described, it is obvious to those skilled in the art that various changes may be made without departing from the scope of the invention.

Description of Reference Numerals

10 Turbine
12 Compressor
14 Turbine housing
16 Turbine rotor blade
18 Compressor housing
20 Impeller
22 Shaft
24 Turbine casing
26 End wall
28 Bearing housing
30 Compressor casing
32 End wall
34 Tubular part
36 Scroll part
38 Communication part
40 Introducing part
41 Tongue part
42 Outer peripheral wall
44 Wall
48 Circle
50 Axis

**Claims**

1. A turbine (1) comprising:

   a turbine rotor blade (16);
   a turbine housing (14) having a scroll part (36) extending along a circumferential direction of the turbine rotor blade (16),
   **characterized in that**
   the scroll part (36) having an inner peripheral edge defined by a virtual circle (48) around an axis (50) of the turbine rotor blade (16) such as to contact a tongue part (41) and an outer peripheral edge defined by an outer peripheral wall (42) of the scroll part (36) is configured such that an A/R ratio of a flow passage area A, the A being an area of a space which is formed between the virtual circle (48) and the outer peripheral wall (42) of the scroll part (36), to a distance R between an axis (50) of the turbine rotor blade (16) and a flow passage center (C) of the scroll part (36) has a concave distribution at least in a part of a graph where an abscissa represents a circumferential position around the axis (50) of the turbine rotor blade (16) and an ordinate represents the A/R ratio.

2. The turbine according to claim 1,
   wherein, provided that the circumferential position is 0° at an inlet of the scroll part (36) and a positional value of the circumferential position increases from the inlet toward an end of the scroll part (36), the scroll part (36) is configured such that a rate of change of the A/R while the circumferential position changes from 0° to 90° is at least 1.2 times higher than a case where the A/R linearly decreases.

3. The turbine according to claim 2,
   wherein the scroll part (36) is configured such that the rate of change of the A/R while the circumferential position changes from 0° to 90° is at least 1.4 times higher than the case where the A/R linearly decreases.

4. The turbine according to any one of claims 1 to 3, wherein the scroll part (36) is configured such that the rate of change of the A/R while the circumferential position changes from 0° to 90° is up to three times higher than a case where the A/R linearly decreases.

**Patentansprüche**

1. Eine Turbine (1), umfassend:

    eine Turbinenrotorschaufel (16);
    ein Turbinengehäuse (14), welches einen Schneckenteil (36) aufweist, welches sich entlang einer umfänglichen Richtung der Turbinenrotorschaufel (16) erstreckt,
    **dadurch gekennzeichnet, dass** der Schneckenteil (36), welcher eine innere periphere Kante aufweist, welche durch einen virtuellen Kreis (48) um eine Achse (50) der Turbinenrotorschaufel (16) definiert ist, um einen Zungenteil (41) und eine äußere periphere Kante, welche durch eine äußere periphere Wand (42) des Schneckenteils (36) definiert ist, zu kontaktieren, eingerichtet ist, so dass ein A/R-Verhältnis eines Flussdurchgangsgebiets A, wobei A ein Gebiet eines Raums ist, welcher zwischen dem virtuellen Kreis (48) und der äußeren peripheren Wand (42) des Schneckenteils (36) gebildet wird, zu einem Abstand R zwischen einer Achse (50) der Turbinenrotorschaufel (16) und einem Flussdurchgangszentrum (C) des Schneckenteils (36), eine konkave Verteilung zumindest in einem Teil eines Graphens aufweist, wobei eine Abszisse eine umfängliche Position um die Achse (50) der Turbinenrotorschaufel (16) repräsentiert und eine Ordinate das A/R-Verhältnis repräsentiert.

2. Turbine gemäß Anspruch 1, wobei, unter der Voraussetzung, dass die umfängliche Position 0° ist bei einem Einlass des Schneckenteils (36) und ein Positionswert der umfänglichen Position sich von dem Einlass in Richtung eines Endes des Schneckenteils (36) vergrößert, der Schneckenteil (36) so eingerichtet ist, dass eine Änderungsrate von A/R, während sich die umfängliche Position von 0° zu 90° ändert, zumindest 1,2 mal größer ist, als bei einem Fall wo sich das A/R linear verringert.

3. Turbine gemäß Anspruch 2, wobei der Schneckenteil (36) so eingerichtet ist, dass die Änderungsrate des A/R, während sich die umfängliche Position von 0° zu 90° ändert, zumindest 1,4 mal größer ist, als bei dem Fall wo sich das A/R linear verringert.

4. Turbine gemäß einem Ansprüche 1 bis 3, wobei der Schneckenteil (36) so eingerichtet ist, dass die Änderungsrate von A/R, während sich die umfängliche Position von 0° zu 90° ändert, bis zu dreimal größer ist, als bei einem Fall wo sich das A/R linear verringert.

**Revendications**

1. Une turbine (1) comprenant :

    une roue à aubes de turbine (16) ;
    un carter de turbine (14) avec une partie de volute (36) s'étendant le long d'une direction circonférentielle de la roue à aubes de turbine (16),
    **caractérisée en ce que**
    la partie de volute possède un bord périphérique interne défini par un cercle virtuel (48) formé autour d'un axe (50) de la roue à aubes de turbine (16) de manière à venir en contact avec une partie de languette (41) et un bord périphérique externe défini par une paroi périphérique externe (42) de la partie de volute (36) est configuré de telle sorte qu'un rapport A/R d'une aire de passage d'écoulement A, où A est l'aire d'un espace qui est formé entre le cercle virtuel (48) et la paroi périphérique externe (42) de la partie de volute (36), par rapport à une distance R entre un axe (50) de la roue à aubes de turbine (16) et un centre du passage d'écoulement (C) de la partie de volute (36) présente une distribution concave au moins dans une partie d'un graphique dans lequel une abscisse représente une position circonférentielle autour de l'axe (50) de la roue à aubes de turbine (16) et une ordonnée représente le rapport A/R.

2. La turbine selon la revendication 1, dans laquelle, si la position circonférentielle est de 0° à une entrée de la partie de volute (36) et une valeur de position de la position circonférentielle augmente depuis l'entrée vers une extrémité de la partie de volute (36), la partie de volute (36) est configurée de telle sorte qu'un taux de variation de A/R lorsque la position circonférentielle varie de 0° à 90° est d'au moins 1,2 fois supérieur à ce qu'il est lorsque A/R diminue linéairement.

3. La turbine selon la revendication 2, dans laquelle la partie de volute (36) est configurée de telle sorte que le taux de variation de A/R lorsque la position circonférentielle varie de 0° à 90° soit d'au moins 1,4 fois supérieur à ce qu'il est lorsque A/R décroit linéairement.

4. La turbine selon l'une des revendications 1 à 3, dans laquelle la partie de volute (36) est configurée de telle sorte que le taux de variation de A/R lorsque la position circonférentielle varie de 0° à 90° soit d'au moins trois fois supérieur à ce qu'il est lorsque A/R décroit linéairement.

# FIG.1

FIG.2

90°

36
24
38
42
16
180°
48
0° (360°)
41 44
40

270°

Circumferential position θ

Exhaust gas

FIG.3

Radial position r

50

R                    R

16
34
14
36
42 24
48
C
C
26 38

FIG.4

FIG.5

FIG.6

FIG.7

FIG.8

FIG.9

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20130219885 A
- US 20130052054 A1
- US 20100074744 A1
- JP 5087160 B